# FASCICULE DE BREVET EUROPEEN

(11) **EP 2 518 343 B1**
(45) Date de publication et mention de la délivrance du brevet: **02.04.2014**
(21) Numéro de dépôt: 12163555.1
(22) Date de dépôt: 10.04.2012
(51) Int. Cl.: F16C 19/16, F16D 23/14, F16C 33/38, F16C 23/08

(54) **Butée d' embrayage de véhicule automobile**
Kupplungsausrücklager
Release bearing for automotive vehicle

(30) Priorité: 29.04.2011 FR 1153694
(43) Date de publication de la demande: 31.10.2012
(73) Titulaire: NTN-SNR Roulements, 74000 Annecy (FR)
(72) Inventeur: Berthier, Julien, 74410 Saint Jorioz (FR)
(74) Mandataire: Sayettat, Julien Christian

(56) Documents cités:
- WO-A1-92/21889
- WO-A1-2007/006394
- CA-A1- 2 504 233
- US-A1- 2004 033 000

## Description

L'invention concerne une butée d'embrayage de véhicule automobile, ladite butée comprenant une bague tournante et une bague fixe pourvues chacune d'une piste de roulement formant entre elles un chemin de roulement à contact oblique dans lequel des corps roulants sont disposés pour guider la rotation de ladite bague tournante.

L'invention concerne également un système d'actionnement de l'embrayage d'un véhicule automobile comprenant une telle butée et un dispositif de déplacement axial de ladite butée relativement au diaphragme de l'embrayage.

Selon une réalisation, le dispositif de déplacement axial de la butée peut être à commande hydraulique, notamment au moyen d'un piston, comme par exemple les dispositifs dénommés à commande concentrique hydraulique (CSC pour Concentric Slave Cylinder en anglais).

En particulier, notamment pour des raisons d'encombrement du dispositif à commande hydraulique, les butées d'embrayage utilisées dans de tels systèmes comprennent une bague extérieure tournante autour d'une bague intérieure fixe en rotation, ladite bague extérieure comprenant une portée d'actionnement permettant la mise en appui du diaphragme pour son déplacement entre une position d'embrayage et une position de débrayage.

Toutefois, le diaphragme monté sur l'ensemble côté moteur et le piston de déplacement peuvent ne pas être parfaitement concentriques. Ainsi, pour compenser ce défaut entre le diaphragme et le piston, il est connu d'utiliser un dispositif d'autocentrage qui est apte à générer un effort d'autocentrage entre ledit piston et la butée.

Par ailleurs, du fait de la liaison rigide entre la portée d'actionnement et la bague intérieure, il existe un risque de déclipsage de la butée en cas de désalignement entre ladite butée et le diaphragme. Ce risque est d'autant plus important que la baisse des coûts de fabrication des diaphragmes implique des tolérances géométriques de ceux-ci qui sont moins bonnes.

En outre, des vibrations et des oscillations sont transmises depuis le diaphragme au dispositif de déplacement par l'intermédiaire de la butée, ce qui peut conduire à une usure prématurée dudit dispositif, notamment au niveau des joints du piston hydraulique assurant le déplacement axial.

Enfin, l'appui exercé entre la portée d'actionnement et le diaphragme peut être source d'usure et de bruits, ce qu'il convient également d'éviter.

Pour résoudre ces problèmes, on connaît l'utilisation de butées d'embrayage dans lesquelles la portée d'actionnement est montée par rapport au dispositif de déplacement avec une possibilité de rotulage.

En particulier, le document FR-2 916 502 enseigne l'utilisation d'une bague d'actionnement rotulante par rapport à la bague tournante, le document FR-2 934 025 enseigne l'utilisation d'une bague rotulante de montage de la butée sur le dispositif de déplacement axial et le document US-6 997 619 enseigne l'utilisation d'une piste de roulement présentant un tronçon dont la géométrie est agencée pour permettre un rotulage de la bague tournante par débattement des corps roulants sur ledit tronçon.

Dans ces réalisations, il peut être souhaitable de limiter l'angle de rotulage de la bague afin d'éviter que des contacts puissent apparaitre lors du rotulage entre des parties fixes et des parties tournantes de la butée.

Pour ce faire, le document US-6 997 619 propose une piste de roulement présentant une portion centrale de débattement qui est entourée par deux portions latérales, lesdites portions latérales présentant un rayon qui est inférieur à celui de ladite portion centrale. Ainsi, après débattement sur la portion centrale, les corps roulants sont disposés sur une portion latérale dans laquelle leur débattement est bloqué dans une position de rotulage maximal pour la bague rotulante.

Toutefois, une piste de roulement à plusieurs rayons s'avère difficilement réalisable industriellement, et ce d'autant plus pour définir précisément une position de rotulage maximal.

L'invention vise notamment à résoudre ce problème en proposant une butée d'embrayage comprenant une bague rotulante facilement réalisable et dont le rotulage est limité de façon précise et fiable afin d'éviter un risque de contact lors du rotulage entre des parties fixes et des parties tournantes de la butée.

A cet effet, et selon un premier aspect, l'invention propose une butée d'embrayage de véhicule automobile comprenant une bague tournante et une bague fixe pourvues chacune d'une piste de roulement formant entre elles un chemin de roulement à contact oblique dans lequel des corps roulants sont disposés pour guider la rotation de ladite bague tournante, la piste de roulement d'une bague présentant une géométrie agencée pour permettre un rotulage de ladite bague par débattement des corps roulants sur ladite piste, la bague rotulante présentant une paroi annulaire qui borde la piste de roulement, ladite paroi étant agencée pour limiter le débattement des corps roulants sur la piste de roulement par appui desdits corps roulants sur ladite paroi afin de définir une position de rotulage maximal pour la bague rotulante.

Selon un deuxième aspect, l'invention propose un système d'actionnement de l'embrayage d'un véhicule automobile comprenant un diaphragme, ledit système comprenant une telle butée et un dispositif de déplacement axial de ladite butée entre une position d'embrayage dans laquelle la bague tournante est disposée contre le diaphragme et une position de débrayage dans laquelle ladite bague appuie sur ledit diaphragme.

D'autres objets et avantages de l'invention apparaîtront dans la description qui suit, faite en référence aux figures jointes, dans lesquelles :
- la figure 1 est une vue partielle en coupe longitudinale d'une butée d'embrayage selon un mode de réalisation de l'invention;
- les figures 2 sont des vues partielles en coupe longitudinale d'une butée d'embrayage selon une variante de réalisation de la figure 1, dans lesquelles la bague rotulante est respectivement coaxiale à l'autre bague (figure 2a) et en position de rotulage maximal (figure 2b).

En relation avec les figures, on décrit ci-dessous une butée d'embrayage de véhicule automobile qui est destinée à être intégrée dans un système d'actionnement de l'embrayage d'un véhicule automobile comprenant un diaphragme (non représenté).

Dans une telle réalisation, le débrayage est réalisé par appui sur le diaphragme par l'intermédiaire de la butée. Pour ce faire, le système d'actionnement comprend un dispositif de déplacement axial (non représenté) de la butée entre une position d'embrayage et la position de débrayage.

La butée d'embrayage comprend une bague tournante 1 et une bague fixe 2 pourvues chacune d'une piste de roulement 3, 4 formant entre elles un chemin de roulement à contact oblique dans lequel des corps roulants 5 sont disposés pour guider la rotation de ladite bague tournante. Sur les figures, un seul côté de la butée est représenté, l'autre côté étant symétrique par rapport à son axe de révolution.

Dans les modes de réalisation représentés, la bague extérieure 1 est tournante autour d'une bague intérieure 2 qui est fixe en rotation, lesdites bagues étant réalisées en tôle emboutie pour présenter chacune une piste de roulement 3, 4.

Dans cette description, les termes de positionnement dans l'espace sont pris en référence à l'axe de rotation de la bague extérieure 1. En particulier, le terme « intérieur » est relatif à une disposition proche de cet axe et le terme « extérieur » est relatif à une disposition à distance de cet axe. Par ailleurs, les termes « avant » et « arrière » sont relatifs à une disposition par rapport au sens de déplacement de la butée vers la position de débrayage, à savoir à gauche sur les figures pour « avant » et à droite pour « arrière ».

La bague 2 fixe en rotation est destinée à être déplacée en translation axiale par l'intermédiaire d'un piston hydraulique du dispositif de déplacement. Pour ce faire, la bague intérieure 2 est disposée autour d'un manchon 6 de montage sur le dispositif de déplacement axial, par exemple sur la tige d'un piston, ou en coulissement sur un arbre du système d'actionnement. Dans les modes de réalisation représentés, le manchon 6 comprend un logement axial 7 dans lequel l'extrémité du piston peut être disposée, ledit logement étant pourvu de griffes 8 afin d'assurer la retenue.

Par ailleurs, la bague intérieure 2 est montée sur le manchon 6 par l'intermédiaire d'un dispositif d'autocentrage qui est apte à générer un effort d'autocentrage entre le manchon 6 et la butée. Dans le mode de réalisation représenté, le dispositif d'autocentrage comprend une rondelle élastique 9, par exemple une rondelle de type Belleville ou une rondelle comprenant une pluralité d'ondes axiales, de sorte à générer l'effort d'autocentrage entre le manchon 6 et la bague intérieure 2.

La rondelle 9 est d'une part en appui sur l'avant d'une portée radiale 2a de la bague intérieure 2 et d'autre part en blocage axial arrière contre un repli radial 6a qui est formé sur une portée axiale du manchon 6. Par ailleurs, la surface de la portée radiale 2a qui est opposée à la rondelle 9 est en appui axial sur une portée radiale 6b du manchon 6.

Ainsi, par mise en appui de la portée radiale 2a sur l'extrémité du piston qui est reçue dans le logement 7, un effort axial d'autocentrage est établi entre la bague intérieure 2 et ledit piston. Par ailleurs, un jeu radial 10 est formé entre l'extrémité intérieure de la portée radiale 2a et le manchon 6 de sorte à permettre l'autocentrage par déplacement radial de la bague intérieure 2 relativement au manchon 6 et donc au piston.

La bague extérieure 1 présente une portée d'actionnement 1a par appui sur le diaphragme de l'embrayage afin d'actionner ledit diaphragme par l'intermédiaire de ladite portée. Ainsi, en position d'embrayage, la portée d'actionnement 1 a peut être disposée contre le diaphragme sans exercer un effort d'appui suffisant pour le débrayage et, en position de débrayage, la portée 1 a appuie sur ledit diaphragme. Dans les modes de réalisation représentés, la portée d'actionnement 1a est formée par une extension radiale avant de la bague extérieure 1. En variante, la portée d'actionnement 1a peut être rapportée sur la bague extérieure 1, par exemple sous la forme d'une bague ou d'un insert.

Le chemin de roulement réalisé entre les pistes 3, 4 est à contact oblique dans le sens d'application de l'effort de déplacement de la butée en position de débrayage. Par ailleurs, des corps roulants formés de billes 5 sont disposés pour guider la rotation de la bague extérieure 1 et transmettre les efforts exercés sur chacune des bagues 1, 2, lesdites billes étant équiréparties dans le chemin de roulement par l'intermédiaire d'une cage.

Pour permettre le rotulage de la bague extérieure 1 par rapport à la bague intérieure 2, la piste de roulement 3 d'une bague 1 présente une géométrie agencée pour permettre le débattement des corps roulants 5 sur ladite piste.

Dans le mode de réalisation représenté, la bague intérieure 2 présente une piste de roulement 4 qui présente une osculation standard avec les billes 5, la piste de roulement 3 de la bague extérieure 1 présentant une géométrie sphérique qui est centrée sur l'axe de symétrie de la bague extérieure 1.

En particulier, cette réalisation permet le basculement de la bague extérieure tournante 1 par rapport à la bague intérieure 2 fixe, notamment sur une course angulaire de l'ordre de 5°, de sorte à ajuster la position de l'axe de la bague extérieure 1 par rapport à celui de la bague intérieure 2.

Ainsi, lors du déplacement axial de la butée en position de débrayage, la portée d'actionnement 1a appuie sur le diaphragme avec possibilité pour la bague extérieure 1 de rotuler par rapport à la bague intérieure 2 de sorte à compenser les éventuels désalignements entre la butée et le diaphragme.

En outre, la possibilité de rotulage de la bague extérieure 1 permet une filtration des efforts transmis par l'intermédiaire de la butée, notamment des vibrations et des oscillations potentiellement endommageantes pour le dispositif de déplacement. En outre, sur la course de rotulage, les efforts sont amortis, notamment relativement aux chocs entre la portée d'actionnement 1a et le diaphragme.

Pour limiter son angle de rotulage, la bague rotulante 1 présente une paroi annulaire 11. Dans le mode de réalisation représenté, la paroi annulaire 11 borde vers l'avant la piste de roulement sphérique 3, la portée d'actionnement 1a étant reliée à ladite paroi annulaire à l'opposé de ladite piste de roulement sphérique.

La paroi annulaire 11 est agencée pour limiter le débattement des corps roulants 5 sur la piste de roulement sphérique 3 par appui desdits corps roulants sur ladite paroi. Ainsi, la paroi annulaire 11 formant butée, on définit une position de rotulage maximal pour la bague rotulante 1.

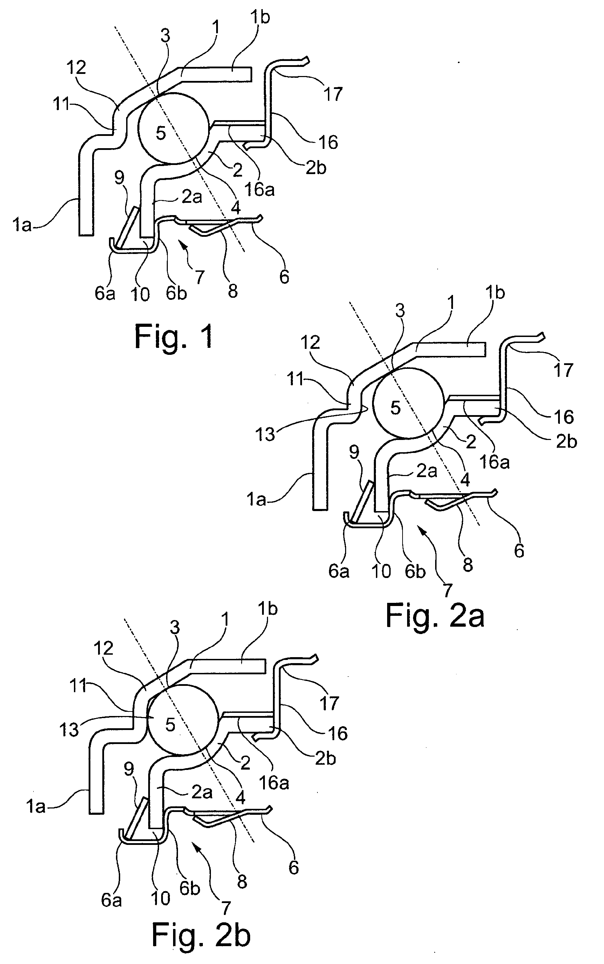

La figure 2b représente la position de rotulage maximal lors du basculement de la bague extérieure 1, l'angle de rotulage de la bague extérieure 1 étant limité sur une plage angulaire définie autour de la position coaxiale (figures 1 et 2a).

La position de rotulage maximal peut être choisie pour éviter que des contacts puissent apparaître lors du rotulage entre des parties fixes et des parties tournantes de la butée. En particulier, en jouant sur la position de la paroi annulaire 11 par rapport à la piste de roulement sphérique 3, la position de rotulage maximal peut être définie de façon particulièrement simple et précise.

En outre, la portée annulaire 11 peut être réalisée simplement par déformation de la bague extérieure 1, notamment en formant un congé de raccordement coudé 12 qui relie la paroi annulaire 11 à la piste de roulement sphérique 3. En particulier, le congé de raccordement 12 présente un rayon bien inférieur au rayon d'osculation standard pour les billes 5.

Dans le mode de réalisation représenté, la paroi annulaire 11 s'étend radialement vers l'intérieur pour venir refermer partiellement le chemin de roulement du côté avant. Ainsi, la paroi annulaire 11 est agencée pour que, en position de rotulage maximal (figure 2b), les corps roulants 5 soient en appui sur la piste de roulement sphérique 3 et sur la paroi annulaire 11. En outre, les corps roulants 5 ne sont pas en appui sur le congé de raccordement 12 lorsque la bague extérieure 1 est en position de rotulage maximal.

En particulier, les angles de contact des billes 5 sur respectivement la piste de roulement sphérique 3 et la paroi annulaire 11 peuvent être écartés d'une valeur supérieure à 10°, notamment comprise entre 20 ° et 50°, afin de fiabiliser le blocage de la bague rotulante 1 en position de rotulage maximal.

En variante représentée sur les figures 2, la paroi annulaire 11 peut présenter une piste de roulement 13 sur laquelle les corps roulants 5 viennent en appui en position de rotulage maximal. En particulier, la piste de roulement 13, par exemple réalisée par rectification, peut présenter une osculation standard pour les billes 5 afin de faciliter la rotation de la bague extérieure 1 en position de rotulage maximal.

La butée peut comprendre également un dispositif d'étanchéité d'un côté du chemin de roulement, notamment du côté arrière qui est opposé à la portée d'actionnement 1 a, pour limiter les fuites de lubrifiant présent dans le chemin de roulement ainsi que la contamination dudit chemin avec des polluants extérieurs.

En particulier, le dispositif d'étanchéité peut comprendre au moins un déflecteur, par exemple réalisé en tôle emboutie, qui est associé à une bague 1, 2 pour former un jeu d'étanchéité. En particulier, le jeu est agencé pour éviter une interférence lors du rotulage de la bague extérieure 1. En variante, l'étanchéité peut être réalisée par un joint associé à une bague 1, 2 pour venir frotter sur l'autre bague 2, 1.

La butée représentée comprend également un support 16 présentant une couronne 17 d'appui d'un moyen de précontrainte, par exemple formé d'un ressort (non représenté), exerçant un effort axial de précharge sur la butée de sorte que la portée d'actionnement 1 a en position d'embrayage soit disposée contre le diaphragme.

En particulier, le support 16 peut être réalisé en matériau métallique et présenter une portée axiale 16a d'emmanchement sur la bague intérieure 1.

## Revendications

1. Butée d'embrayage de véhicule automobile comprenant une bague tournante (1) et une bague fixe (2) pourvues chacune d'une piste de roulement (3, 4) formant entre elles un chemin de roulement à contact oblique dans lequel des corps roulants (5) sont disposés pour guider la rotation de ladite bague tournante, la piste de roulement (3) d'une bague (1) présentant une géométrie agencée pour permettre un rotulage de ladite bague par débattement des corps roulants (5) sur ladite piste, ladite butée étant **caractérisée en ce que** la bague rotulante (1) présente une paroi annulaire (11) qui borde la piste de roulement (3), ladite paroi étant agencée pour limiter le débattement des corps roulants (5) sur la piste de roulement (3) par appui desdits corps roulants sur ladite paroi afin de définir une position de rotulage maximal pour la bague rotulante (1).

2. Butée d'embrayage selon la revendication 1, **caractérisée en ce que** la paroi annulaire (11) s'étend radialement.

3. Butée d'embrayage selon la revendication 1 ou 2, **caractérisée en ce que** la paroi annulaire (11) est reliée à la piste de roulement (3) par un congé de raccordement coudé (12).

4. Butée d'embrayage selon l'une quelconque des revendications 1 à 3, **caractérisé en ce que** la paroi annulaire (11) présente une piste de roulement (13) sur laquelle les corps roulants (5) viennent en appui en position de rotulage maximal.

5. Butée d'embrayage selon l'une quelconque des revendications 1 à 4, **caractérisée en ce que** la paroi annulaire (11) est agencée pour que, en position de rotulage maximal, les corps roulants (5) soient en appui sur la piste de roulement (3) et sur la paroi annulaire (11).

6. Butée d'embrayage selon l'une quelconque des revendications 1 à 5, **caractérisée en ce que** la piste de roulement (3) présente une géométrie sphérique qui est centrée sur un axe de symétrie de la bague rotulante (1).

7. Butée d'embrayage selon l'une quelconque des revendications 1 à 6, **caractérisée en ce que** la bague tournante (1) est rotulante.

8. Butée d'embrayage selon la revendication 7, **caractérisé en ce que** la bague tournante (1) présente une portée (1a) d'actionnement par appui sur un diaphragme de l'embrayage, ladite portée étant reliée à la paroi annulaire (11) à l'opposé de la piste de roulement (3).

9. Butée d'embrayage selon l'une quelconque des revendications 1 à 8, **caractérisée en ce qu'**elle comprend en outre un manchon (6) de montage, la bague fixe (2) présentant une portée radiale (2a) qui est en appui axial sur ledit manchon par l'intermédiaire d'un dispositif d'autocentrage.

10. Butée d'embrayage selon l'une quelconque des revendications 1 à 9, **caractérisée en ce que** la bague extérieure (1) est tournante et la bague intérieure (2) est fixe.

11. Système d'actionnement de l'embrayage d'un véhicule automobile comprenant un diaphragme, ledit système comprenant une butée selon l'une quelconque des revendications 1 à 10 et un dispositif de déplacement axial de ladite butée entre une position d'embrayage dans laquelle la bague tournante (1) est disposée contre le diaphragme et une position de débrayage dans laquelle ladite bague appuie sur ledit diaphragme.

## Patentansprüche

1. Kupplungslager eines Kraftfahrzeugs, umfassend einen drehenden Ring (1) und einen festen Ring (2), die jeweils mit einer Rollbahn (3, 4) versehen sind, die zwischen sich einen Rollweg mit schrägem Auflauf bilden, auf dem Rollkörper (5) angeordnet sind, um die Drehung des drehenden Rings zu führen, wobei die Rollbahn (3) eines Rings (1) eine Geometrie aufweist, die angeordnet ist, um eine Drehbarkeit des Rings durch den Ausschlag der rollenden Körper (5) auf der Bahn zu ermöglichen, wobei das Lager **dadurch gekennzeichnet ist, dass** der drehende Ring (1) eine ringförmige Wand (11) aufweist, die die Rollbahn (3) einfasst, wobei die Wand angeordnet ist, um den Ausschlag der drehenden Körper (5) auf der Rollbahn (3) durch die Auflage der drehenden Körper auf der Wand zu begrenzen um eine Position der maximalen Drehbarkeit für den drehenden Ring (1) zu definieren.

2. Kupplungslager nach Anspruch 1, **dadurch gekennzeichnet, dass**: sich die ringförmige Wand (11) radial erstreckt.

3. Kupplungslager nach Anspruch 1 oder 2, **dadurch gekennzeichnet, dass**: die ringförmige Wand (11) mit der Rollbahn (3) durch eine gebogene Verrundung (12) verbunden ist.

4. Kupplungslager nach einem der Ansprüche 1 bis 3, **dadurch gekennzeichnet, dass** die ringförmige Wand (11) eine Rollbahn (13) aufweist, auf der die drehenden Körper (5) in der Position der maximalen Drehbarkeit aufliegen.

5. Kupplungslager nach einem der Ansprüche 1 bis 4, **dadurch gekennzeichnet, dass** die ringförmige Wand (11) angeordnet ist, damit, in der Position der maximalen Drehbarkeit, die drehenden Körper (5) auf der Rollbahn (3) und auf der ringförmigen Wand (11) aufliegen.

6. Kupplungslager nach einem der Ansprüche 1 bis 5, **dadurch gekennzeichnet, dass** die Rollbahn (3) eine sphärische Geometrie aufweist, die auf einer Symmetrieachse des drehenden Rings (1) zentriert ist.

7. Kupplungslager nach einem der Ansprüche 1 bis 6, **dadurch gekennzeichnet, dass** der drehende Ring (1) schwenkbar ist.

8. Kupplungslager nach Anspruch 7, **dadurch gekennzeichnet, dass**: der drehbare Ring (1) einen Betätigungsbereich (1a) durch Auflage auf einer Membran der Kupplung aufweist, wobei der Bereich mit der ringförmigen Wand (11) gegenüber der Rollbahn (3) verbunden ist.

9. Kupplungslager nach einem der Ansprüche 1 bis 8, **dadurch gekennzeichnet, dass** es außerdem eine Montagehülse (6) aufweist, wobei der feste Ring (2) einen radialen Bereich (2a) aufweist, der auf der Hülse mit Hilfe einer Autozentriervorrichtung axial aufliegt.

10. Kupplungslager nach einem der Ansprüche 1 bis 9, **dadurch gekennzeichnet, dass** der äußere Ring (1) drehend ist und der innere Ring (2) fest ist.

11. Betätigungssystem der Kupplung eines Kraftfahrzeugs, umfassend eine Membran, wobei das System eine Kupplung nach einem der Ansprüche 1 bis 10und eine Vorrichtung zur axialen Verschiebung der Kupplung zwischen eine Kupplungsposition, in der der drehende Ring (1) gegen die Membran angebracht ist, und einer Auskupplungsposition, in der der Ring auf der Membran aufliegt, umfasst.

## Claims

1. Clutch release bearing of a motor vehicle comprising a rotating ring (1) and a fixed ring (2) each provided with a rolling track (3, 4) forming between them a rolling path with diagonal contact wherein rolling bodies (5) are arranged to guide the rotation of said rotating ring, with the rolling track (3) of a ring (1) having a geometry arranged in order to allow for a swivelling of said ring via displacement of the rolling bodies (5) on said track, said bearing being **characterised in that** the swivelling ring (1) has an annular wall (11) which borders the rolling track (3), said wall being arranged to limit the displacement of the rolling bodies (5) on the rolling track (3) by the bearing of said rolling bodies on said wall in order to define a maximum swivelling position for the swivelling ring (1).

2. Clutch release bearing according to claim 1, **characterised in that** the annular wall (11) extends radially.

3. Clutch release bearing according to claim 1 or 2, **characterised in that** the annular wall (11) is connected to the rolling track (3) by an elbowed journal fillet radius (12).

4. Clutch release bearing according to any of claims 1 to 3, **characterised in that** the annular wall (11) has a rolling track (13) whereon the rolling bodies (5) provide support in the maximum swivelling position.

5. Clutch release bearing according to any of claims 1 to 4, **characterised in that** the annular wall (11) is arranged so that, in the maximum swivelling position, the rolling bodies (5) are bearing against the rolling track (3) and on the annular wall (11).

6. Clutch release bearing according to any of claims 1 to 5, **characterised in that** the rolling track (3) has a spherical geometry which is centred on an axis of symmetry of the swivelling ring (1).

7. Clutch release bearing according to any of claims 1 to 6, **characterised in that** the rotating ring (1) is swivelling.

8. Clutch release bearing according to claim 7, **characterised in that** the rotating ring (1) has a surface (1a) for actuating by bearing on a diaphragm of the clutch, said surface being connected to the annular wall (11) opposite the rolling track (3).

9. Clutch release bearing according to any of claims 1 to 8, **characterised in that** it further comprises an assembly sleeve (6), with the fixed ring (2) having a radial surface (2a) which is bearing axially against said sleeve by the intermediary of a self-centring device.

10. Clutch release bearing according to any of claims 1 to 9, **characterised in that** the outer ring (1) is rotating and the inner ring (2) is fixed.

11. System for actuating the clutch of a motor vehicle comprising a diaphragm, said system comprising a bearing according to any of claims 1 to 10 and a system for the axial displacement of said bearing between an engaged position wherein the rotating ring (1) is arranged against the diaphragm and a disengaged position wherein said ring bears against said diaphragm.
